# EUROPÄISCHE PATENTSCHRIFT

(11) **EP 1 359 063 B1**
(45) Veröffentlichungstag und Bekanntmachung des Hinweises auf die Patenterteilung: **05.07.2006**
(21) Anmeldenummer: 03009004.7
(22) Anmeldetag: 17.04.2003
(51) Int. Cl.: B60R 21/20

(54) **Verstärkungsgewebe für Airbag-Abdeckungen in Kfz**
Reinforcement web for airbag covers in motor vehicles
Tissu de renforcement pour couvercle de coussin gonflable dans des véhicules à moteur

(30) Priorität: 23.04.2002 DE 20206379 U
(43) Veröffentlichungstag der Anmeldung: 05.11.2003
(73) Patentinhaber: DELCOTEX - Delius Conze & Colsmann Techtex GmbH & Co. KG, 33739 Bielefeld (DE)
(72) Erfinder: Wittenborn, Stefan, c/o DELCOTEX - Delius Conze &, 33739 Bielefeld (DE)
(74) Vertreter: TER MEER - STEINMEISTER & PARTNER GbR

(56) Entgegenhaltungen:
- DE-A- 19 935 625
- US-A- 3 481 371
- US-A- 5 221 108
- US-A- 6 076 564

## Beschreibung

Die Erfindung betrifft ein Verstärkungsgewebe für Airbag-Abdeckungen in Kraftfahrzeugen, bei dem wenigstens zwei Kettfäden zusammengefaßt und in den Zwischenräumen zwischen den Schußfäden verdreht sind.

Airbags werden in Kraftfahrzeugen vielfach unter Kunststoff-Verkleidungen angeordnet, die bei Auslösung des Airbags im Zusammenhang mit einem Unfall aufgerissen werden und den Airbag austreten lassen. Damit das Aufreißen der Kunststoffverkleidungen, die sich beispielsweise im Bereich des Armaturenbretts oder auch an den Fahrzeugseiten befinden, kontrolliert erfolgt, wird in die Kunststoff-Abdeckungen ein Verstärkungsgewebe eingearbeitet oder auf der Rückseite auf diese aufgeklebt, in dem sich ein beispielsweise doppel-T-förmiger Einschnitt befindet, der eine Sollbruchlinie vorgibt.

Die DE 199 35 625 C2 beschreibt eine Airbag-Abdeckung der obigen Art.

Bei Verwendung einer doppel-T-förmigen Schnittlinie werden zwei Klappen gebildet, die beim Auslösen des Airbags auseinanderklappen.

In der Praxis tritt dieser Aufklappeffekt jedoch gelegentlich nicht mit der gewünschten Genauigkeit ein, beispielsweise bei exzentrischer Belastung durch den Airbag oder bei nicht genau einstellbarem Aufreißwiderstand der Kunststoffabdeckung. Während die üblichen Verstärkungsgewebe mit einfacher Leinwandbindung in den beiden Fadenrichtungen sehr reißfest sind, ist die Festigkeit gegenüber diagonal zu dem Gewebe gerichteten Kräften sehr gering. Es kommt daher vor, daß die Abdeckung nicht nur entlang den Schnittlinien des Gewebes getrennt wird, sondern unregelmäßig aufreißt, so daß sich Teile der Kunststoffabdeckung lösen und in das Wageninnere geschleudert werden.

Der Erfindung liegt daher die Aufgabe zugrunde, ein Verstärkungsgewebe der genannten Art zu schaffen, dessen Reißfestigkeit in Diagonalrichtung und dessen Weiterreißfestigkeit an Einschnitten erhöht sind.

Diese Aufgabe wird bei einem Verstärkungsgewebe der obigen Art dadurch gelöst, daß das Gewebe mit einem Polymer schiebefixiert ist.

Durch Verdrehung der Kettfädenpaare zwischen den Schußfäden kommt es zu einer wesentlichen Stabilisierung des Gewebes und zu einer Erhöhung der Reibungskräfte im Gewebe, so daß insgesamt die Reißfestigkeit in Diagonalrichtung wesentlich erhöht wird.

Vorzugsweise werden jeweils mehrere Schußfäden zu einer Gruppe zusammengefaßt, beispielsweise drei Schußfäden, und die Kettfäden werden jeweils zwischen diesen Schußfaden-Gruppen verdreht. Dabei ist es besonders vorteilhaft, wenn die beiden zusammengehörigen Kettfäden in Leinwandbindung gegenläufig mit den Schußfäden der Schußfaden-Gruppen verwebt sind. Dies trägt weiter zu der Erhöhung der Reibung zwischen den sich kreuzenden Fäden und damit zur Stabilisierung auch in Diagonalrichtung bei.

Im folgenden werden bevorzugte Ausführungsbeispiele der Erfindung anhand der beigefügten Zeichnung näher erläutert.
- Fig. 1: ist eine Teildarstellung eines herkömmlichen Verstärkungsgewebes mit den üblicherweise verwendeten Schnittlinien und vergrößert dargestellter Gewebestruktur;
- Fig. 2: ist eine entsprechende Darstellung des erfindungsgemäßen Gewebes.

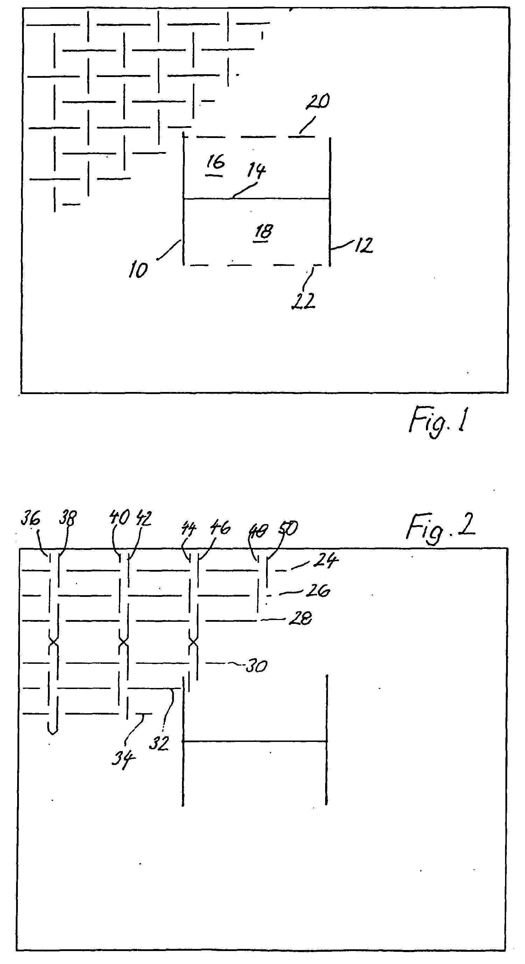

In Fig. 1 ist ein Ausschnitt aus einem zumeist rechteckigen Zuschnitt eines Verstärkungsgewebes herkömmlicher Art gezeigt, in das eine Schnittlinie mit zwei parallelen Schnittlinien-Abschnitten 10,12 und einer deren Mittelpunkte verbindenden Schnittlinie 14 eingezeichnet ist. Die Schnittlinien haben die Form eines T mit Querstrichen am oberen und unteren Ende eines senkrechten Striches und werden daher hier auch als doppel-T-förmig bezeichnet.

Bei Druckbelastung durch einen Airbag reißt die nicht dargestellte Kunststoffverkleidung entlang diesen Linien auf, so daß zwei Klappen 16,18 entstehen, die bei normaler Funktion entlang zweier gestrichelt dargestellten Linien 20,22, die die entsprechenden Enden der parallelen Schnittlinien 10,12 verbinden und eine Art von Scharnierlinien bilden, aufklappen.

Bei nicht ordnungsgemäßer Funktion kann das Verstärkungsgewebe beispielsweise von den Enden der parallelen Schnittlinien 10,12 diagonal einreißen.

Daraus kann sich ein unkontrolliertes Aufreißen der Kunststoffabdeckung ergeben, und aus dieser können sich einzelne Teile lösen und in das Innere des Fahrzeugs geschleudert werden.

Durch das erfindungsgemäße Gewebe, das in einem Ausschnitt in Fig. 2 dargestellt ist, wird diese Gefahr erheblich eingeschränkt und die Reißfestigkeit des Gewebes in Diagonalrichtung wesentlich verbessert.

Fig. 2 zeigt zwei Gruppen von Schußfäden 24,26,28 und 30,32,34. Anstelle dieser Gruppen von drei Schußfäden können auch Fadengruppen mit weniger oder mehr Fäden gebildet werden.

Die Kettfäden werden jeweils zu Kettfaden-Paaren 36,38;40,42;44,46;48,50 zusammengefaßt und jeweils zwischen den Schußfaden-Gruppen 24,26,28 und 30,32,34 verdreht. Die beiden paarweise angeordneten Kettfäden 36 bis 50 werden mit den Gruppen der Schußfäden in gegenläufiger Leinwandbindung verwebt, d. h. entgegengesetzt zueinander über und unter den Schußfäden der Schußfaden-Gruppen geführt. Da die Kettfäden zwischen den Schußfaden-Gruppen verdreht und auf diese Weise eng beieinandergehalten werden, kommt in Verbindung mit der gegenläufigen Verwebung mit den Schußfäden eine hohe gegenseitige Reibung zustande, die einem diagonalen Aufreißen entgegenwirkt.

Nach dem Weben wird das Verstärkungsgewebe mit einem Polymer, z. B. Polyurethan, Acrylat, SBR oder PVC schiebefixiert. Die Auswahl des Materials wird in Anpassung an das Material der Armaturenbrett-Verkleidung vorgenommen. Gleichzeitig ermöglicht das Polymer eine anpassbare Versteifung je nach den Bedürfnissen des Weiterverarbeiters.

## Patentansprüche

1. Verstärkungsgewebe für Airbag-Abdeckungen in Kraftfahrzeugen, bei dem wenigstens zwei Kettfäden (36,38) zusammengefaßt und in den Zwischenräumen zwischen den Schußfäden (24,26,28;30,32,34) verdreht sind, **dadurch gekennzeichnet, daß** das Gewebe mit einem Polymer schiebefixiert ist.

2. Verstärkungsgewebe nach Anspruch 1, **dadurch gekennzeichnet, daß** jeweils mehrere Schußfäden (24,26,28;30,32,34) zu Gruppen zusammengefaßt sind.

3. Verstärkungsgewebe nach Anspruch 2, **dadurch gekennzeichnet, daß** die Schußfäden (24,26,28;30,32,34) der Gruppen mit den beiden Kettfäden (36,38;40,42;44,46;48,50) in Leinwandbindung gegenläufig verwebt sind.

4. Vestärkungsgewebe nach Anspruch 2 oder 3, **dadurch gekennzeichnet, daß** die Schußfaden-Gruppen (24,26,28;30,32,34) drei Kettfäden enthalten.

5. Verstärkungsgewebe nach einem der Ansprüche 1 bis 4, **dadurch gekennzeichnet, daß** das Polymer ein Polyurethan ist.

6. Verstärkungsgewebe nach einem der Ansprüche 1 bis 4, **dadurch gekennzeichnet, daß** das Polymer ein Acrylat ist.

7. Verstärkungsgewebe nach einem der Ansprüche 1 bis 4, **dadurch gekennzeichnet, daß** das Polymer PVC ist.

## Claims

1. Reinforcement web for airbag covers in motor vehicles, wherein at least two warp threads (36, 38) are brought together and are twisted in the intermediate spaces between the weft threads (24, 26, 28; 30, 32, 34), **characterised in that** the web is secured in a slip-resistant manner by means of a polymer.

2. Reinforcement web according to claim 1, **characterised in that** a plurality of weft threads (24, 26, 28; 30, 32, 34) are brought together to form respective groups.

3. Reinforcement web according to claim 2, **characterised in that** the weft threads (24, 26, 28; 30, 32, 34) of the groups having the two warp threads (36, 38; 40, 42; 44, 46; 48, 50) are interwoven in opposite directions in a basket weave arrangement.

4. Reinforcement web according to claim 2 or claim 3, **characterised in that** the weft thread groups (24, 26, 28; 30, 32, 34) contain three warp threads.

5. Reinforcement web according to any one of claims 1 to 4, **characterised in that** the polymer is a polyurethane.

6. Reinforcement web according to any one of claims 1 to 4, **characterised in that** the polymer is an acrylate.

7. Reinforcement web according to any one of claims 1 to 4, **characterised in that** the polymer is PVC.

## Revendications

1. Tissu de renfort pour recouvrements de coussins gonflables dans des véhicules automobiles, dans lequel au moins deux fils de chaîne (36, 38) sont réunis et sont torsadés dans les interstices entre les fils de trame (24, 26, 28 ; 30, 32, 34), **caractérisé en ce que** le tissu est fixé contre le glissement par un polymère.

2. Tissu de renfort selon la revendication 1, **caractérisé en ce que** plusieurs fils de trame (24, 26, 28 ; 30, 32, 34) sont réunis en groupes.

3. Tissu de renfort selon la revendication 2, **caractérisé en ce que** les fils de trame (24, 26, 28 ; 30, 32, 34) des groupes sont tissés avec les deux fils de chaîne (36, 38 ; 40, 42 ; 44, 46 ; 48, 50) dans une armure toile.

4. Tissu de renfort selon la revendication 2 ou 3, **caractérisé en ce que** les groupes de fils de trame (24, 26, 28 ; 30, 32, 34) contiennent trois fils de chaîne.

5. Tissu de renfort selon l'une des revendications 1 à 4, **caractérisé en ce que** le polymère est un polyuréthane.

6. Tissu de renfort selon l'une des revendications 1 à 4, **caractérisé en ce que** le polymère est un acrylate.

7. Tissu de renfort selon l'une des revendications 1 à 4, **caractérisé en ce que** le polymère est du PVC.
